# FASCICULE DE BREVET EUROPEEN

(11) **EP 2 496 376 B1**
(45) Date de publication et mention de la délivrance du brevet: **11.05.2016**
(21) Numéro de dépôt: 10775791.6
(22) Date de dépôt: 29.10.2010
(51) Int. Cl.: B22F 3/105, B29C 67/00

(54) **PROCEDE DE FRITTAGE AMELIORE**
VERBESSERTES SINTERUNGSVERFAHREN
ENHANCED SINTERING METHOD

(30) Priorité: 03.11.2009 FR 0957765
(43) Date de publication de la demande: 12.09.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: BONNET, Daniel, F-63800 St Georges sur Allier (FR); WASZKIEWICZ, Arkadiusz, PL-10-691 Olsztyn (PL)
(74) Mandataire: Lasson, Cédric Y. M.
(86) Numéro de dépôt international: PCT/EP2010/066536
(87) Numéro de publication internationale: WO 2011/054772

(56) Documents cités:
- WO-A1-2004/004955
- DE-A1-102004 041 633
- JP-A- 2004 162 095
- US-A- 5 753 274

## Description

L'invention concerne le domaine technique de la fabrication des pièces de moule par frittage laser de poudres métalliques dans lequel des objets, et plus particulièrement des pièces de moule, sont produits par fusion sélective des poudres et construits par superposition de couches. Cette technique de frittage, est aussi appelée frittage laser ou SLM (de l'anglais Sélective Laser Melting).

L'intérêt de cette technique de fabrication de pièces est que la forme de la pièce peut être modélisée par ordinateur et la pièce peut être facilement fabriquée par frittage sur la base de cette modélisation. En effet, le laser peut être piloté par un ordinateur comprenant une modélisation de la pièce, et l'on peut alors fabriquer la pièce par frittage successif de couches de poudre superposées.

Cette technique est particulièrement bien adaptée pour la réalisation des pièces de moule complexes car elle permet dans une même opération de fabriquer des éléments de garniture de petites dimensions tels que des lamelles ou des cordons.

La réalisation des pièces se fait à partir d'un plateau de référence horizontal sur lequel on dépose une première couche de poudre métallique que l'on vient fusionner sélectivement à l'aide du rayon lumineux émanant de la source laser. Une deuxième couche de poudre métallique est alors introduite et l'opération de fusion sélective est alors relancée, et ainsi de suite jusqu'à obtention de la pièce finale.

Le plateau de référence, dont la surface est plane sert donc de base à la construction par couches successives de l'objet. Il n'est donc pas étonnant de constater que la fusion de la première couche a pour effet de souder le plateau à l'objet à réaliser, lorsque la poudre métallique et le métal formant le plateau de référence ont des points de fusion suffisamment proches. Aussi, en fin d'opération, il convient de détacher le plateau de référence de la pièce finale, qui peut être soit utilisée dans l'état soit faire l'objet d'une reprise de finition. Cette opération peut se réaliser, par exemple, par une découpe rapide à l'aide d'un fil.

L'objet de l'invention est de mettre à profit cette particularité et de proposer une adaptation des plateaux de référence et du procédé de fabrication.

En effet, il a été observé que certaines pièces peuvent être décomposées en deux parties distinctes, comme cela est notamment divulgué dans le document WO2004004955. Une première partie de la pièce peut faire l'objet d'une fabrication rapide et économique à l'aide de moyens d'usinage classiques, par moulage ou par enlèvement de métal, du type par fraisage, tournage ou rectification, et ne présente pas une forme particulièrement difficile à réaliser à l'aide de ces moyens.

La seconde partie de la pièce présente quant à elle des formes particulières qu'il est judicieux de réaliser à l'aide d'un dispositif de frittage laser du type ci-dessus, mais dont les temps de cycle sont en règle générale plus long et plus coûteux à mettre en oeuvre que les dispositifs d'usinage classiques. Aussi, bien souvent, c'est l'ensemble de la pièce qui est réalisée par frittage laser lorsque la pièce comprend des parties qu'il ne serait pas possible de réaliser autrement.

Il apparaît alors intéressant de réaliser la pièce en question en deux étapes distinctes, et de décomposer la pièce en deux parties que l'on réalisera chacune avec les moyens les plus appropriés.

Le dispositif de frittage comprend une source laser dont le faisceau lumineux est apte à fusionner de manière sélective des couches successives de poudres métalliques, et un plateau de référence sur lequel est déposée la première couche de poudre métallique, et servant de base à la construction d'un objet.

Ce dispositif se caractérise en ce que ledit plateau comprend un ou plusieurs logements dont la forme est déterminée de manière à rendre lesdits logements aptes à recevoir des inserts de forme donnée.

Le procédé selon l'invention de fabrication d'un objet métallique par frittage par fusion sélective de couches successives de poudre métalliques à l'aide d'un dispositif selon l'invention comprend les étapes au cours desquelles :
A - on dispose dans les logements du plateau de référence des inserts métalliques comportant une tête plane dont la forme de la section correspond à la forme de la section des logements du plateau de référence de sorte que la tête de l'insert soit coplanaire avec le plan formé par le plateau de référence,
B - on dépose une première couche de poudre métallique d'une épaisseur donnée sur le plateau de référence,
C - on fait fusionner sélectivement la première couche de poudre métallique à l'aide du faisceau provenant de la source laser sur la surface de poudre métallique en contact avec la tête des inserts, de manière à lier la tête de chacun des inserts au reste de chacun des objets à fabriquer.

Le dispositif permet d'optimiser la fabrication de la pièce complète en autorisant l'obtention de la première partie de la pièce, faisant office d'insert, à l'aide d'un moyen classique d'usinage, et de réaliser la seconde partie de la pièce à l'aide du dispositif de frittage laser selon l'invention tout en autorisant une jonction parfaite entre les deux pièces pour obtenir une pièce finale d'un seul tenant.

On s'arrange alors pour sectionner la pièce à réaliser en deux parties par un plan, de sorte que les faces de jonction entre la première et la seconde partie de la pièce puissent s'inscrire dans ledit plan.

Il suffit alors de placer la première partie de la pièce dans le logement du plateau de référence destiné à la recevoir, et de disposer la face de jonction de la première partie de la pièce et formant la tête de l'insert, afin qu'elle soit coplanaire avec la surface du plateau de référence.

La soudure entre les deux faces de jonction de la première et de la seconde partie de la pièce s'opère lors de la fusion de la première couche de poudre métallique par le faisceau laser, et cette soudure se fait sur l'ensemble de la surface de jonction entre la première et la seconde partie de la pièce.

La réalisation de la seconde partie de la pièce peut se poursuivre à l'aide du dispositif de frittage laser de manière connue.

La pièce finale, d'un seul tenant, présente alors les mêmes caractéristiques qu'une pièce réalisée entièrement par frittage laser. Mais son coût d'obtention peut en être réduit de manière significative.

La description qui suit s'appuie sur les figures 1 à 7 dans lesquelles :
- la figure 1 représente une vue schématique d'un plateau de référence selon l'art antérieur,
- la figure 2 représente une vue schématique d'un plateau de référence selon l'invention,
- la figure 3 représente une vue schématique des inserts selon l'invention,
- la figure 4 représente une vue schématique plateau de référence après mise en place des inserts,
- les figures 5 et 6 représentent des vues schématiques de pièces de moules réalisées à l'aide du procédé selon l'invention,
- la figure 7 représente une vue schématique du plateau de référence selon l'invention et des pièces après extraction dudit plateau.

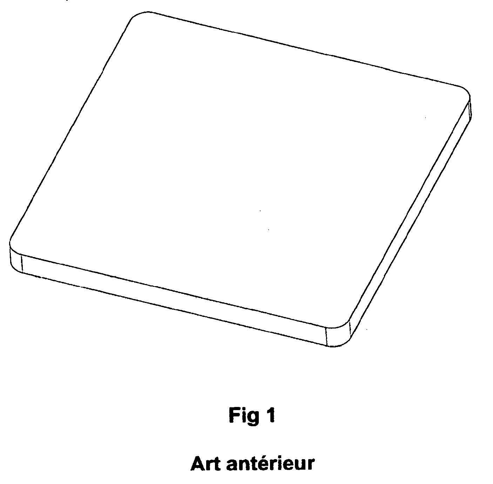

Le plateau représenté à la figure 1 illustre un plateau de référence selon l'art antérieur connu. Ce plateau présente une face plane de référence sur laquelle le moyen de balayage du dispositif de frittage laser vient déposer une première couche de poudre métallique d'épaisseur aussi constante que possible. Pour faciliter l'accroche de cette première couche la rugosité de la face de référence est adaptée.

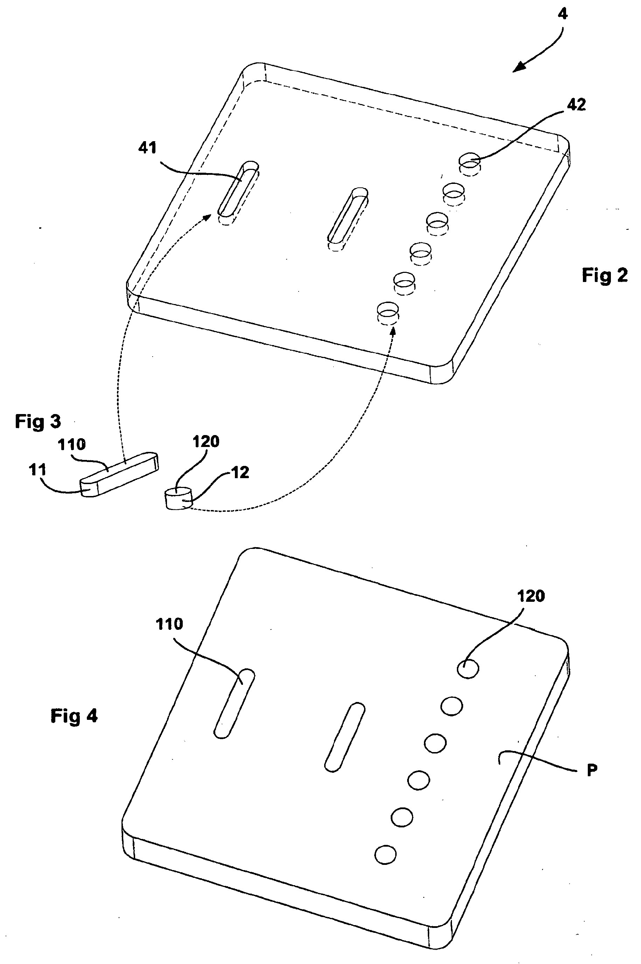

La figure 2 représente un plateau de référence 4 dans lequel des logements 41, 42 ont été aménagés. Ces logements ont une section correspondant à la forme des inserts 11 et 12 représentés à la figure 3. Ces inserts forment la première partie des pièces à réaliser. On s'assure par ailleurs que la tête des inserts 11 et 12 ait une face, respectivement 110 et 120, inscriptibles dans un plan.

En règle générale, la forme des inserts 11, 12, et donc des logements 41, 42 est relativement simple. Ainsi, dans le cas de l'exemple de réalisation de l'invention servant de base à la présente description, ces inserts ont une forme cylindrique dans laquelle les génératrices du cylindre sont perpendiculaires à la surface 110 ou 120. Il n'est toutefois pas impossible d'imaginer des formes plus complexes et d'aménager les logements en conséquence.

La figure 4 permet de visualiser l'étape du procédé selon l'invention après que des inserts 11 et 12 aient été disposés dans les logements 41 et 42. On notera que le plan 110, 120 de la tête des inserts est ici coplanaire avec la surface P de référence du plateau de référence.

Dans une variante de réalisation, la tête de l'insert peut dépasser la surface P de référence du plateau de référence.

Dans une autre variante de réalisation, la tête de l'insert peut se situer en dessous de la surface P de référence du plateau de référence.

Dans une autre variante de réalisation, la section d'ouverture des logements et la section de la tête de l'insert coïncident assez précisément. Ainsi, on évite des fuites de poudre dans les espaces non désirés entre l'insert et le plateau.

Il n'est pas nécessaire que le matériau de l'insert soit de même nature que la poudre métallique utilisée pour le frittage, ce qui permet d'obtenir des pièces ayant des caractéristiques particulières intéressantes. Il convient seulement que le laser soit suffisamment puissant pour mettre les deux métaux simultanément en fusion afin d'autoriser la jonction par soudure entre les deux faces de jonction.

A titre d'exemple, une poudre métallique à base de cobalt ayant un point de fusion de 1350°C opère une jonction par soudure de qualité, avec un insert à base de fer ayant un point de fusion de 1500°C.

On observe, en effet, que la profondeur de pénétration du laser est de l'ordre de 80 µm. On s'arrange alors pour que la couche de poudre n'excède pas une certaine épaisseur, de 40 µm par exemple. Le laser est alors suffisamment puissant pour mettre simultanément en fusion les deux matériaux en les portant à une température très supérieure à 1500°C.

Une fois les inserts installés dans leurs logements, les opérations de construction du reste de la pièce par frittage laser peuvent s'effectuer de manière connue par dépôt et fusion sélective des couches successives.

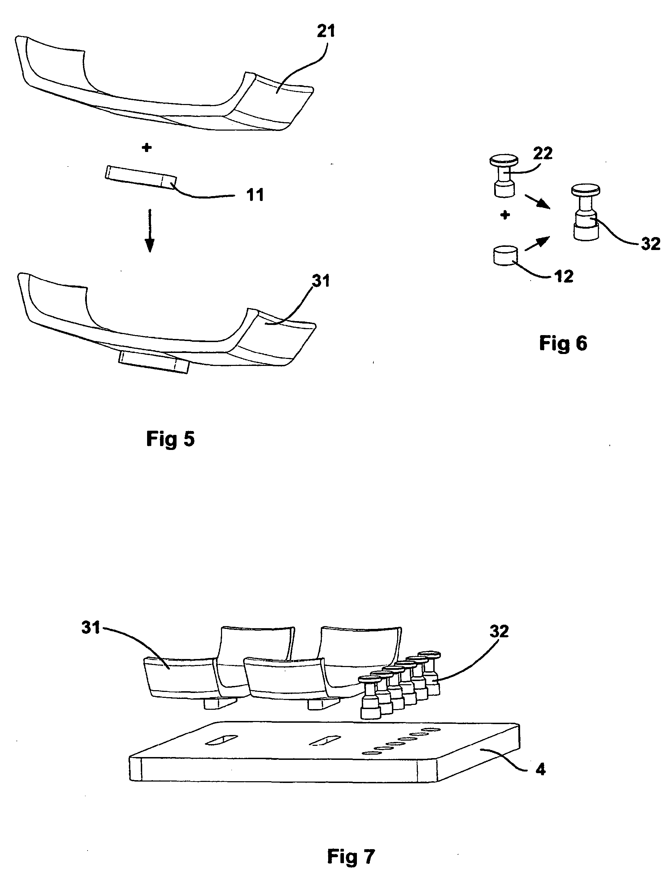

Les figures 5 et 6 illustrent des exemples de pièces qu'il est possible de réaliser à l'aide du procédé selon l'invention. La pièce finale 31, 32 est décomposée en une première pièce 11, 12 réalisée à l'aide de moyens économiques adaptés et formant les inserts, et la seconde partie de la pièce 21, 22 réalisées par frittage laser.

La figure 7 illustre la phase finale du procédé selon l'invention au cours de laquelle les pièces finies et d'un seul tenant, 31 et 32, sont extraites du plateau 4.

Au delà de l'intérêt économique obtenu par le dispositif et le procédé décrits ci-dessus, on peut aussi tirer avantageusement partie de l'invention en mettant à profit la meilleure précision de fabrication des inserts lorsqu'ils sont obtenus par usinage. En particulier, les inserts peuvent constituer des éléments d'ancrage de la pièce finale (31, 32) dans des supports réalisés avec une grande précision géométrique.

On notera également que grâce à l'invention on évite une opération supplémentaire de découpe de l'objet fabriqué avec le plateau support. En effet, seul la zone de la première couche recouvrant la première partie de l'objet est fusionnée à l'aide du laser. Les autres zones de la première couche en contact direct avec le plateau support ne sont pas liées avec ce plateau support de sorte que ces zones peuvent être évacuées simplement une fois l'objet réalisé.

## Revendications

1. Procédé de fabrication d'un objet (31, 32) métallique, ledit objet comportant une première partie (11, 12) et une seconde partie (21, 22), ladite première partie de l'objet étant fabriquée préalablement à la seconde partie dudit objet, ledit procédé de fabrication comportant les étapes suivantes :
- on insert dans au moins un logement (41, 42) d'un plateau de référence (4) la première partie de l'objet (11, 12),
- on fabrique à l'aide d'un faisceau laser la seconde partie dudit objet (21, 22) par fusion sélective de couches successives de poudre métallique, selon les étapes suivantes :
- on dépose une première couche de poudre métallique sur le plateau de référence (4), ladite première couche ayant une épaisseur prédéterminée de sorte que la première partie de l'objet soit recouverte par une zone de ladite première couche,
- on fusionne sélectivement la première couche en orientant le faisceau laser seulement sur la zone de la première couche recouvrant la première partie de l'objet de sorte à lier la poudre métallique de ladite zone avec ladite première partie de l'objet,
- on réalise le reste de la seconde partie (21, 22) de l'objet (31, 32) par fusion sélective d'autres couches de poudre métallique.

2. Procédé de fabrication selon la revendication 1 **caractérisé en ce que** la première partie de l'objet comporte une tête (110, 120) plane dont la forme de la section correspond à la forme de la section du logement (41, 42) du plateau de référence (4), de sorte que la tête de la première partie de l'objet soit coplanaire avec un plan (P) formé par le plateau de référence (4).

3. Procédé de fabrication selon l'une quelconque des revendications 1 ou 2 dans lequel, on ajuste la puissance du laser de sorte que le faisceau laser soit apte à mettre simultanément en fusion le métal formant la première partie de l'objet (11, 12) et la première couche de poudre métallique.

4. Procédé de fabrication selon l'une quelconque des revendications 1 à 3, dans lequel, on ajuste l'épaisseur de la première couche de poudre métallique de sorte que le faisceau laser soit apte à mettre simultanément en fusion le métal formant la première partie de l'objet (11, 12) et la première couche de poudre métallique.

## Patentansprüche

1. Verfahren zum Herstellen eines metallischen Objekts (31, 32), wobei das Objekt einen ersten Teil (11, 12) und einen zweiten Teil (21, 22) umfasst, wobei der erste Teil des Objekts vor dem zweiten Teil des Objekts hergestellt wird, wobei das Herstellungsverfahren die folgenden Schritte umfasst:
- Einsetzen einer Referenzplatte (4) des ersten Teils (11, 12) des Objekts in wenigstens einen Aufnahmeraum (41, 42),
- Herstellen mit Hilfe eines Laserstrahlenbündels des zweiten Teils (21, 22) des Objekts durch wahlweises Schmelzen aufeinander folgender Schichten aus Metallpulver gemäß den folgenden Schritten:
- Ablagern einer ersten Metallpulverschicht auf der Referenzplatte (4), wobei die erste Schicht eine vorgegebene Dicke hat, derart, dass der erste Teil des Objekts durch eine Zone der ersten Schicht abgedeckt ist,
- wahlweises Schmelzen der ersten Schicht durch Richten des Laserstrahlenbündels nur auf die Zone der ersten Schicht, die den ersten Teil des Objekts abdeckt, derart, dass das Metallpulver der Zone mit dem ersten Teil des Objekts verbunden wir,
- Verwirklichen des Rests des zweiten Teils (21, 22) des Objekts (31, 32) durch wahlweises Schmelzen anderer Metallpulverschichten.

2. Herstellungsverfahren nach Anspruch 1, **dadurch gekennzeichnet, dass** der erste Teil des Objekts einen ebenen Kopf (110, 120) umfasst, dessen Querschnittsform der Form des Querschnitts des Aufnahmeraums (41, 42) der Referenzplatte (4) entspricht, derart, dass der Kopf des ersten Teils des Objekts mit einer Ebene (P), die durch die Referenzplatte (4) gebildet wird, koplanar ist.

3. Herstellungsverfahren nach einem der Ansprüche 1 oder 2, wobei die Leistung des Lasers in der Weise eingestellt wird, dass das Laserstrahlenbündel gleichzeitig das Metall, das den ersten Teil (11, 12) des Objekts bildet, und die erste Metallpulverschicht schmelzen kann.

4. Herstellungsverfahren nach einem der Ansprüche 1 bis 3, wobei die Dicke der ersten Metallpulverschicht in der Weise eingestellt wird, dass das Laserstrahlenbündel gleichzeitig das Metall, das den ersten Teil (11, 12) des Objekts bildet, und die erste Metallpulverschicht schmelzen kann.

## Claims

1. Method for manufacturing a metal object (31, 32), the said object comprising a first part (11, 12) and a second part (21, 22), the said first part of the object being manufactured before the second part of the said object, the said manufacturing method comprising the following steps:
- the first part (11, 12) of the object is inserted into at least one recess (41, 42) of a reference plate (4),
- the second part of the said object (21, 22) is manufactured with the aid of a laser beam by selectively melting successive metal powder layers, according to the following steps:
- a first metal powder layer is deposited on the reference plate (4), the said first layer having a predetermined thickness so that the first part of the object is covered by a region of the said first layer,
- the first layer is selectively melted by directing the laser beam only onto that region of the first layer which covers the first part of the object, so as to bind the metal powder of the said region to the said first part of the object,
- the rest of the second part (21, 22) of the object (31, 32) is produced by selectively melting other metal powder layers.

2. Manufacturing method according to Claim 1, **characterized in that** the first part of the object comprises a planar head (110, 120), the cross-sectional shape of which corresponds to the cross-sectional shape of the recess (41, 42) of the reference plate (4), so that the head of the first part of the object is coplanar with a plane (P) formed by the reference plate (4).

3. Manufacturing method according to either of Claims 1 and 2, wherein the power of the laser is adjusted so that the laser beam is capable of simultaneously melting the metal forming the first part (11, 12) of the object and the first metal powder layer.

4. Manufacturing method according to any one of Claims 1 to 3, wherein the thickness of the first metal powder layer is adjusted so that the laser beam is capable of simultaneously melting the metal forming the first part (11, 12) of the object and the first metal powder layer.
